Europäisches Patentamt

European Patent Office

Office européen des brevets

(19)

(11) **EP 1 376 887 A1**

(12) **EUROPEAN PATENT APPLICATION**
published in accordance with Art. 158(3) EPC

(43) Date of publication:
**02.01.2004 Bulletin 2004/01**

(51) Int Cl.⁷: **H04B 1/707**

(21) Application number: **02707283.4**

(86) International application number:
**PCT/JP2002/003265**

(22) Date of filing: **01.04.2002**

(87) International publication number:
**WO 2002/082680 (17.10.2002 Gazette 2002/42)**

(84) Designated Contracting States:
**AT BE CH CY DE DK ES FI FR GB GR IE IT LI LU MC NL PT SE TR**

(30) Priority: **02.04.2001 JP 2001103348**

(71) Applicant: **MITSUBISHI DENKI KABUSHIKI KAISHA**
**Tokyo 100-8310 (JP)**

(72) Inventor: **TENDA, Yoichi**
**c/o Mitsubishi Denki Kabushiki Kaisha**
**Chiyoda-ku, Tokyo 100-8310 (JP)**

(74) Representative: **Pfenning, Meinig & Partner GbR**
**Mozartstrasse 17**
**80336 München (DE)**

(54) **MULTI-USER DEMODULATION APPARATUS, RECEPTION APPARATUS, AND MULTI-CHANNEL DEMODULATION METHOD**

(57) A plurality of fingers 12 separately demodulate reception signals of a plurality of paths transmitted from a plurality of terminals. A first rake combining unit 13a combines a plurality of demodulated signals corresponding to a first transmission terminal from among the signals demodulated by the fingers 12. A second rake combining unit 13b combines a plurality of demodulated signals corresponding to a second transmission terminal from among the signals demodulated by the fingers 12. A change-over switch 16a connects a finger 12-8 from among the fingers 12-1 to 12-32 to either of the first rake combining unit 13a and the second rake combining unit 13b in a switchable manner. Therefore, a plurality of users can use a single finger in a switchable manner.

FIG.2

## Description

TECHNICAL FIELD

The present invention relates to a multi-user demodulating apparatus that demodulates a plurality of reception signals, a receiving apparatus, and a multi-channel demodulating method.

BACKGROUND ART

In the conventional technology, a rake receiving system that receives spectrum-spread signals is well known and is used as a communications system that has superior characteristics in interference-resistant and interruption-resistant reception. An example of the rake receiving system is disclosed in Japanese Patent Laid-Open Publication No. H11-8606. The rake receiving apparatus comprises a plurality of fingers to demodulate each path of one modulated reception signal. Demodulated signals are obtained in a rake combining unit by rake-combining the output signals of the fingers.

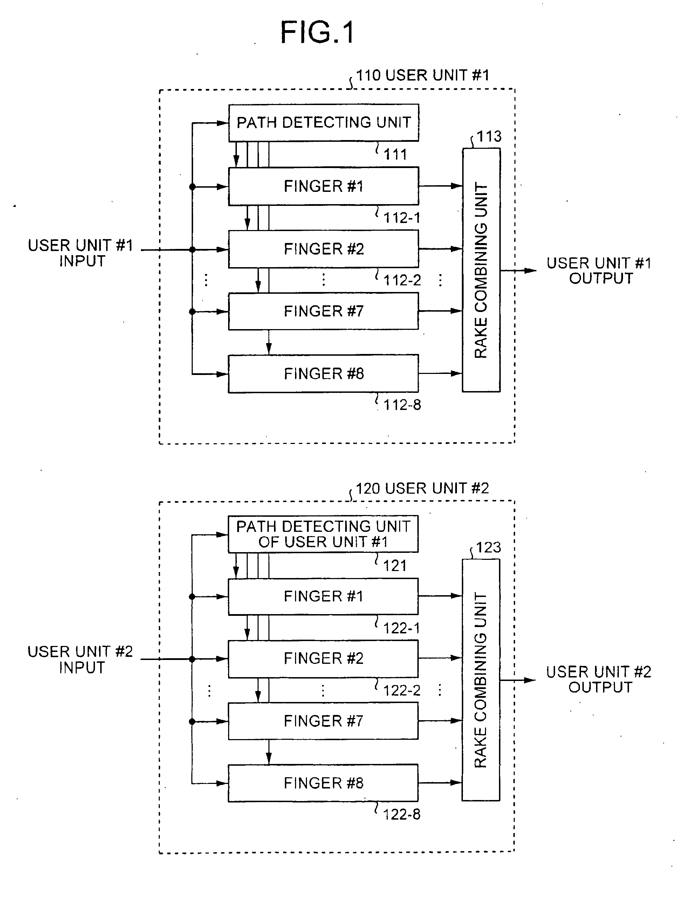

Fig. 1 explains the structure of a rake receiving apparatus in a conventional base transceiver station. A user unit (#1) 110 and a user unit (#2) 120 have an identical structure, and each receives a signal transmitted from different mobile station terminals. The sequence of operations in the user unit (#1) 110 is explained hereafter. The signal received at the user unit (#1) 110 is input to a path detecting unit 111, and the path detecting unit 111 detects each path. The information relating to a single path or a plurality of paths that are detected is conveyed separately to eight fingers 112-1 to 112-8. Each path is then separated and demodulated at the fingers 112-1 to 112-8 according to the path information obtained from the reception signal. These demodulated signals are input to a rake combining unit 113, and the rake combining unit 113 combines the signals. Since there are eight fingers, a maximum of eight paths can be combined in the example shown in Fig. 1.

However, in the demodulating apparatus using the conventional rake receiving system, the rake combining unit and the fingers are connected in a fixed manner. For instance, in the case where the number of paths in the transmission line is greater than the preset number of fingers, the paths exceeding the number of fingers cannot be used in the rake combining. Hence, in order to prevent such problems, it is necessary to provide extra fingers beforehand. On the other hand, if a sufficient number of fingers are provided beforehand, some fingers can not be used in the rake combining when the number of fingers in the transmission line is fewer than the number of fingers, finding a problem of inefficient usage of the fingers.

DISCLOSURE OF THE INVENTION

It is an object of the present invention to provide a multi-user demodulating apparatus, a receiving apparatus, and a multi-channel demodulating method, wherein the multi-user demodulating apparatus, the receiving apparatus, and the multi-channel demodulating method can make efficient use of demodulating units such as fingers for a plurality of reception signals.

The multi-user demodulating apparatus according to the present invention includes a plurality of demodulating units that separately demodulate reception signals of a plurality of paths transmitted from a plurality of transmission terminals, wherein the transmission terminals include a first transmission terminal and a second transmission terminal, a first combining unit that combines a plurality of demodulated signals corresponding to the first transmission terminal from among the signals demodulated by the demodulating units, a second combining unit that combines a plurality of demodulated signals corresponding to the second transmission terminal from among the signals demodulated by the demodulating units, and a switching unit that connects specific one of the demodulating units to either of the first combining unit and the second combining unit in a switchable manner. This structure of the multi-user demodulating apparatus makes it possible to use demodulating units with great efficiency.

The multi-user demodulating apparatus according to the present invention further comprises a path detecting unit that detects a number of paths corresponding to the second transmission terminal and a control unit that controls the switching unit based on the number of paths detected by the path detecting unit in such a way that one of the demodulating units is connected to the second combining unit, wherein the paths are required for demodulating signals transmitted from the second transmission terminal. This structure of the multi-user demodulating apparatus makes it possible to use demodulating units with great efficiency.

The multi-user demodulating apparatus according to the present invention further comprises a control unit that detects an intensity of the demodulated signal from the second combining unit and controls the switching unit based on the intensity, in such a way that one of the demodulating units is connected to the second combining unit. This structure of the multi-user demodulating makes it possible to enhance reception quality.

The multi-user demodulating apparatus according to the present invention further comprises a memory unit that stores switching data that are externally set, wherein the switching unit switches the connection statuses of the first combining unit and the second combining unit to the demodulating units based on the switching data. This structure of the multi-user demodulating apparatus makes it possible to set a proper number of fingers without having a major change in the hardware.

The multi-user demodulating apparatus according to the present invention further comprises a control unit that controls the switching unit, based on priority data of the second transmission terminal, in such a way that one of the demodulating units is connected to the second combining unit. This structure of the multi-user demodulating apparatus makes it possible to use demodulating units with great efficiency.

The receiving apparatus according to the present invention includes a plurality of fingers that separately demodulate paths of one reception signal among a plurality of reception signals, a control unit that allocates the fingers by determining whether either of a group of the fingers and all the fingers demodulate paths of a first reception signal or paths of a second reception signal, a first rake combining unit that rake-combines, based on the allocation of fingers by the control unit, the demodulated signals output from the fingers corresponding to the first reception signal, and a second rake combining unit that rake-combines, based on the allocation of fingers by the control unit, the demodulated signals output from the fingers corresponding to the second reception signal. This structure of the receiving apparatus makes it possible to use fingers with great efficiency.

The control unit allocates the fingers based on number of paths in either of the first reception signal and the second reception signal, thereby it is possible to obtain a better reception quality with the limited number of fingers.

The control unit allocates the fingers based on an intensity of output signals from either of the first rake combining unit and the second rake combining unit, thereby it is possible to enhance reception quality.

The control unit re-allocates a part of the fingers allocated to the first reception signal to the second reception signal if the preset priority of the second reception signal is higher than the preset priority of the first reception signal, thereby it is possible to obtain a proper communication quality according to the signals.

The control unit re-allocates fingers with a low reception level among the fingers allocated to the first reception signal to the second reception signal, thereby it is possible to enhance the overall reception quality.

The first rake combining unit includes an overflow suppressing unit that suppresses an addition overflow when combining the demodulated signals from the fingers, thereby it is possible to suppress errors caused by the overflow.

The overflow suppressing unit functions corresponding to the number of fingers allocated by the control unit, thereby it is possible to the suppress errors caused by the overflow.

The multi-channel demodulating method according to the present invention comprises a detecting step of detecting communication conditions of a plurality of communication channels, an allocation changing step of dynamically changing, based on the detection result, allocation of a plurality of demodulating units for each communication channel across the communication channels, and a combining step, wherein each of a plurality of combining units provided corresponding to the communication channels combines, based on the allocation result in the allocation changing step, demodulated signals from the demodulating units allocated to the corresponding transmission channels, wherein the demodulating method is for a demodulating apparatus that has a plurality of demodulating units, separately demodulates signals of a plurality of paths in one communication channel using the demodulating units, combines demodulated signals using a plurality of combining units, and obtains a plurality of combined signals of the paths, thereby it is possible to obtain a better communication quality with the limited number of fingers.

BRIEF DESCRIPTION OF THE DRAWINGS

Fig. 1 is a block diagram of a conventional receiving apparatus; Fig. 2 is a block diagram of a receiving apparatus according to a first embodiment of the present invention; Fig. 3 is a block diagram of a receiving apparatus according to a second embodiment of the present invention; Fig. 4 is a block diagram of a receiving apparatus according to a third embodiment of the present invention; Fig. 5 is a flowchart that explains the allocation of fingers according to the third embodiment of the present invention; Fig. 6 is a block diagram of a receiving apparatus according to a fourth embodiment of the present invention; Fig. 7 is a flowchart that explains the allocation of fingers according to the fourth embodiment of the present invention; Fig. 8 is a block diagram of a receiving apparatus according to a fifth embodiment of the present invention; Fig. 9 is a flowchart that explains the allocation of fingers according to the fifth embodiment of the present invention; Fig. 10 is a block diagram of a receiving apparatus according to a sixth embodiment of the present invention; Fig. 11 is a block diagram of a receiving apparatus according to a seventh embodiment of the present invention; Fig. 12 is a flowchart that explains the re-allocation of fingers according to the seventh embodiment of the present invention; and Fig. 13 is a block diagram of a receiving apparatus according to an eighth embodiment of the present invention.

BEST MODE FOR CARRYING OUT THE INVENTION

Exemplary embodiments of the present invention are explained below referring to the accompanying drawings.

First Embodiment

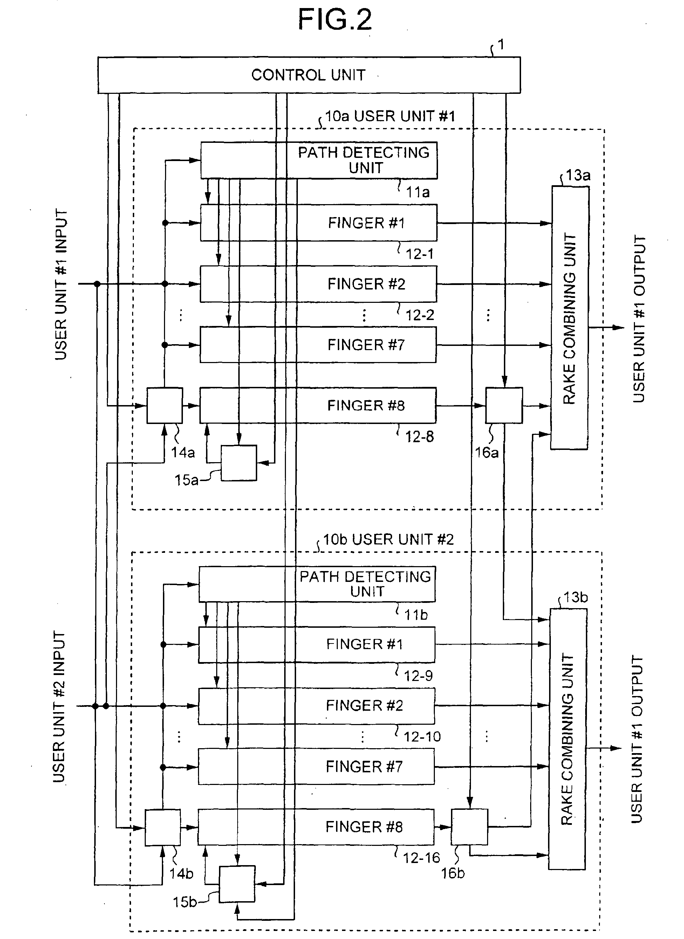

Fig. 2 is a block diagram of a receiving apparatus according to a first embodiment of the present invention. This receiving apparatus includes a demodulating apparatus that has fingers belonging to two user units, used for demodulating signals, and that allows one of the fingers belonging to one user unit to be used for the other user unit. The structure and function of a user unit (#1) 10a is explained below. The structure as well as the function of a user unit (#2) 10b is identical to that of the user unit (#1) 10a.

The user unit (#1) 10a includes a path detecting unit 11 a, a plurality of fingers 12-1 to 12-8, and a rake combining unit 13a. A reception signal that is input to the user unit (#1) 10a is input to the path detecting unit 11 a. The path detecting unit 11 a then detects number of paths of the reception. signal. Information relating to a single detected path or a plurality of detected paths is conveyed separately to the corresponding fingers 12-1 to 12-8. The fingers 12-1 to 12-8 then demodulate each path separately based on the path information obtained from the reception signal. This separately demodulated signal is input to the rake combining unit 13a. The rake combining unit 13a then combines the demodulated signals, and outputs a combined signal as the output of the user unit (#1) 10a.

A control unit 1 that controls the user units (#1) 10a, (#2) 10b is connected to change-over switches 14a, 15a, 16a. The control unit 1 controls switching of the change-over switches 14a, 15a, 16a in such a way that the eighth finger 12-8 out of the fingers 12-1 to 12-8 belonging to the user unit (#1) 10a can be used in the user unit (#2) 10b. The change-over switch 14a is a device that switches between the user unit (#1) 10a and the user unit (#2) 10b in such a way that the reception signal that is input the finger (#8) 12-8 according to the control of the control unit 1 is either from the user unit (#1) 10a or the user unit (#2) 10b. The change-over switch 15a is a device that switches between the path detecting unit 11 a of the user unit (#1) 10a and the path detecting unit 11 b of the user unit (#2) 10b in such a way that the path information that is input to the finger (#8) 12-8 according to the control of the control unit 1 is either from the path detecting unit 11 a or the path detecting unit 11 b. The change-over switch 16a is a device that switches between a rake combining unit 13a of the user unit (#1 ) 10a and a rake combining unit 13b of the user unit (#2) 10b in such a way that the demodulated signal output from the finger (#8) according to the control of the control unit 1 is input to either the rake combining unit 13a or the rake combining unit 23.

The control unit 1, the fingers 12-1 to 12-32, and the rake combining units 13a, 13b are examples of a control unit, a demodulating unit, and a combining unit, respectively. The fingers 12-1 to 12-32 can also be configured as a finger device.

If we assume that all of the change-over switches 14a, 15a, and 16a are connected to the user unit (#2) 10b according to an instruction from the control unit 1, the finger 12-8 of the user unit (#1) 10a demodulates, based on the path information conveyed from the path detecting unit 11b of the user unit (#2) 10b via the change-over switch 15a, the reception signal of the user unit (#2) 10b input via the change-over switch 14a. The output of this demodulation is input to the rake combining unit 13b of the user unit (#2) 10b via the change-over switch 16a. The rake combining unit 13b then combines this output with the output of the fingers 12-9 to 12-16 of the user unit (#2) 10b. That is, in this case, the user unit (#1) 10a can use seven (8-1) fingers and the user unit (#2) 10b can use nine (8+1) fingers. Consequently, in communications carried out by the user unit (#1) 10a, a maximum of seven paths can be demodulated, while in communications carried out by the user unit (#2) 10b, a maximum of nine paths can be demodulated.

On the contrary, if we assume that all of the change-over switches 14a, 15a, and 16a are connected to the user unit (#1) 10a according to an instruction from the control unit 1, the finger 12-8 of the user unit (#1) 10a demodulates, based on the path information conveyed from the path detecting unit 11 a of the user unit (#1) 10a via the change-over switch 15a, the reception signals of the user unit (#1) 10a input via the change-over switch 14a and the output of this demodulation is input to the rake combining unit 13a of the user unit (#1) 10a via the change-over switch 16a. The rake combining unit 13a then combines this output with the output of the other fingers 12-1 to 12-7 of the user unit (#1) 10a. In other words, both the user units (#1) 10a and (#2) 10b can use eight fingers each. Consequently, a maximum of eight paths can be demodulated in communications carried out by the user unit (#1) 10a as well as by the user unit (#2) 10b.

Eight fingers are used in the present embodiment, however, any number of fingers can be used in each user unit as required. Furthermore, although only two user units are employed in the present embodiment, any number of user units can be employed with a facility to switch one finger or a plurality of fingers between the user units.

The control of the control unit 1 over the change-over switches 14a, 15a, and 16a can be carried out anyhow as long as the proper number of fingers is allocated to the user unit according to the communication requirements of the user unit. For instance, the control can be carried out based on the following criteria.

(1) Allocate more fingers to a signal with a poor quality according to the status of the reception signals that are input from each user unit. For instance, a signal-to-noise ratio for each reception signal can be measured by means of a known technology and more number of fingers can be allocated to reception signals with a low signal-to-noise ratio.

(2) Allocate more fingers to a signal with a requirement on high service quality according to the required service quality of the data that the reception signals carry. The required service quality can be determined from a tolerance of error rate, a tolerance of delay time, etc., according to the data type. The number of fingers to be allocated can be determined, for instance, based on the required service quality stipulated in the Third Generation Partnership Project (3GPP) standards etc.

(3) Determine the number of allocating fingers according to the number of paths found in the path detecting unit. For instance, more number of fingers is allocated to a signal with more number of paths suitable for the demodulation, and fewer fingers are allocated to a signal with less number of paths suitable for the demodulation.

(4) Determine the number of allocating fingers according to a priority assigned to each user unit. For instance, more number.of fingers is allocated to a signal with a higher priority, and fewer fingers are allocated to a signal with a lower priority.

(5) Determine the number of allocating fingers according to setting conditions, for instance the number of fingers or the proportion of fingers in each user, of a setting switch that is provided to be set by a system administrator.

In practice, this kind of decision and control can be achieved by using known control apparatuses and software technology. For instance, the output of the control signal can be controlled in such a way that the change-over switch is switched to the user unit with digitized assessment standard values (signal-to-noise ratio, required service quality, number of paths etc.) greater than the preset values or to the user unit with the digitized values greater than those of other user units after comparison with the corresponding user units.

Alternative ways to achieve the structure are described in the following embodiments.

Second Embodiment

In the first embodiment according to the present invention, only one finger is switchable between a plurality of user units and the finger is switchable between only two user units. Following is an example of a structure in which all the fingers are switchable between four user units.

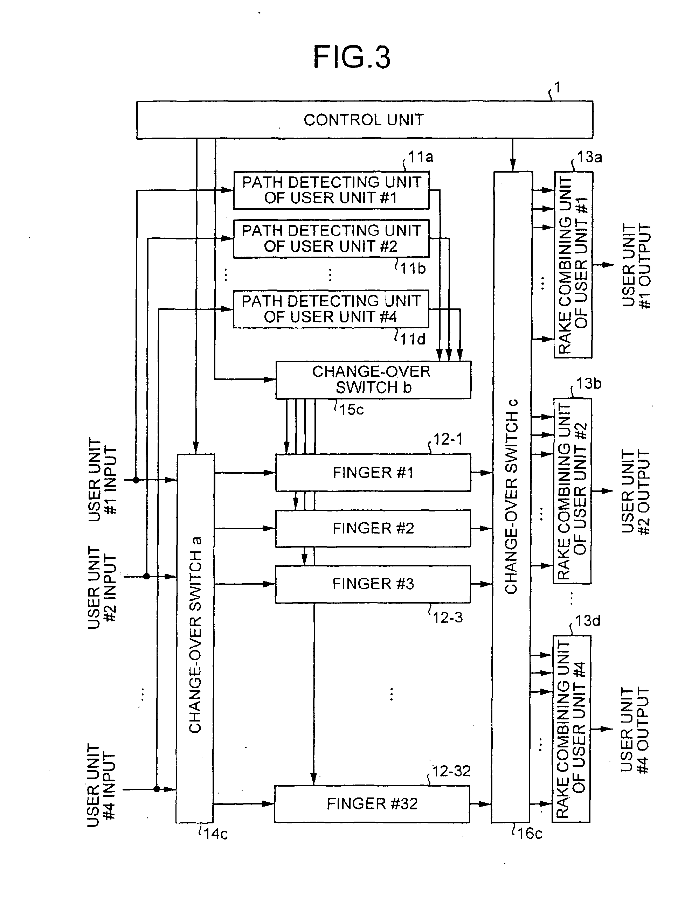

Fig. 3 is a block diagram of a receiving apparatus according to a second embodiment of the present invention. As shown in Fig. 3, the parts identical or equivalent to those shown in Fig. 2 are assigned the same reference numerals. Besides, the structure of fingers 12-17 to 12-32, which are extended compared with the first embodiment, two rake combining units 13d, etc. are identical to corresponding fingers 12-1, the rake combining unit 13a, etc., respectively. A control unit 1 is connected to change-over switches 14c, 15c, and 16c. The control unit 1 controls the switching of the change-over switches 14c, 15c, and 16c in such a way that the 32 fingers 12-1 to 12-32 can be used for any of the user units. The change-over switch 14c is a device that inputs, according to the control of the control unit 1, the reception signals of user units (#1) to (#4) to the corresponding fingers 12-1 to 12-32, by connecting to the fingers 12-1 to 12-32 in a switchable manner. The change-over switch 15a is a device that inputs, according to the control of the control unit 1, a plurality of path information of path detecting units 11a to 11d to the corresponding fingers 12-1 to 12-32 by connecting to the fingers 12-1 to 12-32 in a switchable manner. The change-over switch 16a is a device that inputs, according to the control of the control unit 1, the demodulated signals that are output from the fingers 12-1 to 12-32 to any of the rake combining units 13a to 13d of the corresponding user units by connecting in a switchable manner to any of the rake combining units 13a to 13d.

Let us assume that the change-over switches 14c, 15c, and 16c connect, according to the instruction from the control unit 1, the fingers 12-1 to 12-12 to the user unit (#1), the fingers 12-13 to 12-17 to the user unit (#2), the fingers 12-18 to 12-23 to the user unit (#3), and the fingers 12-24 to 12-32 to the user unit (#4). In this case, the fingers 12-1 to 12 demodulate, based on the path information conveyed by the path detecting unit 11a of the user unit (#1) via the change-over switch 15c, the reception signals of the user unit (#1) that are input via the change-over switch 14c. The rake combining unit 13a then receives twelve output signals from the twelve fingers 12-1 to 12-12 via the change-over switch 16c and combines these output signals.

Similarly, the fingers 12-13 to 12-17 demodulate, based on the path information conveyed by the path detecting unit 11 b of the user unit (#2) via the change-over switch 15c, the reception signals of the user unit (#2) that are input via the change-over switch 14c. The rake combining unit 13b of the user unit (#2) then receives five output signals from the five fingers 12-13 to 12-17 via the change-over switch 16c and combines these output signals.

Similarly, the user unit (#3) combines six output signals and the user unit (#4) combines nine output signals.

In other words, in this case, a maximum of twelve paths can be demodulated in the communication carried out by the user unit (#1), a maximum of five paths can be demodulated in the communication carried out by the user unit (#2), a maximum of six paths can be demodulated in the communication carried out by the user unit (#3), and a maximum nine of paths can be demodulated in the communication carried out by the user unit (#4).

The number of fingers allocated to each user unit can be freely modified, by switching the change-over switches 14c, 15c, and 16c according to the control of the control unit 1 and by modifying the distribution of the 32 fingers among the user units.

In the example of the second embodiment as well as in the following embodiments, the number of user units is taken as four. However, this number is just an example and any number of user units can be employed. Similarly, although the number of fingers is taken as 32, this number also can be modified as required.

Third Embodiment

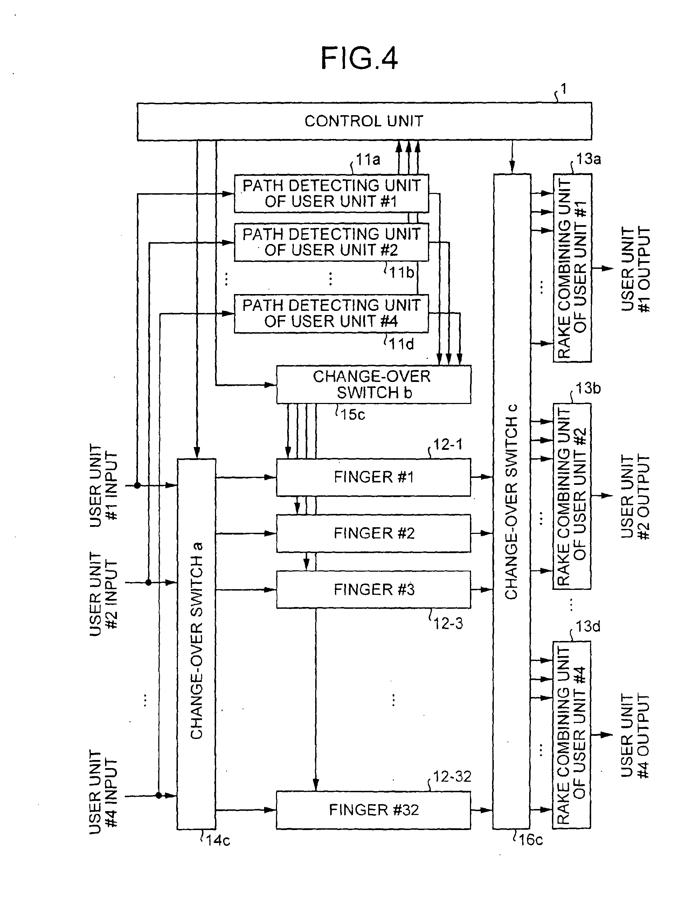

Fig. 4 is an example of a third embodiment of the present invention, wherein the number of allocated fingers is modified according to the number of detected paths present in each user unit. As shown in Fig. 4, the parts identical or equivalent to those shown in Fig. 3 are assigned the same reference numerals. Path detecting units 11a to 11d of user units (#1) to (#4) are connected to a control unit 1. The path detecting units 11a to 11d notify the result of path detection to the control unit 1. The control unit 1 then determines, from the number of paths and the power of the paths notified by the path detecting units 11 a to 11 d of the user units (#1) to (#4) respectively, the number of fingers to be allocated to each user unit. The control unit 1 then controls change-over switches 14c, 15c, and 16c and allocates the determined number of fingers to each user unit.

For instance, it is possible to allocate the fingers 12-1 to 12-32 after determining the number of fingers proportional to the number of paths in which the reception level is greater than an acceptable value. On the other hand, it is also possible to preferentially allocate more fingers to a user unit that has a low reception level in each path.

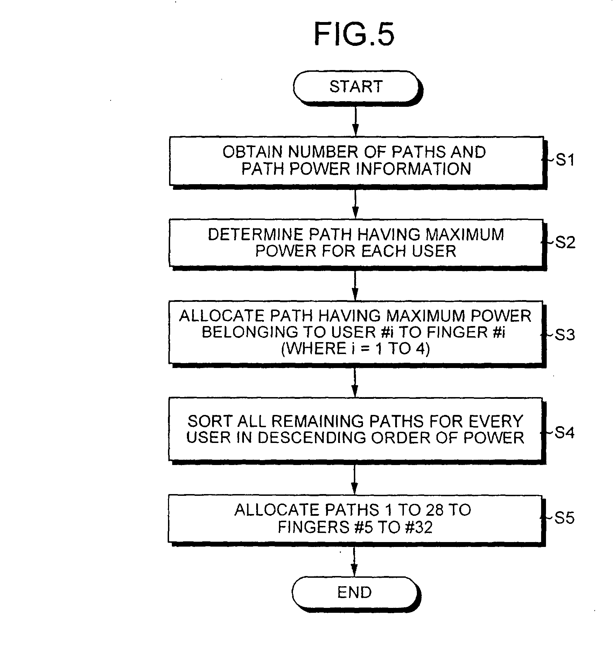

Fig. 5 is a flowchart that explains an example of the method of finger allocation of the control unit 1 shown in Fig. 4. The path detecting units 11 a to 11 d of the user units (#1) to (#4) detect number of paths as well as the value of the power of each path (step S1). Based on this path information, the control unit 1 determines a path having the maximum power for each user unit (step S2). The control unit 1 then allocates these paths, based on the determined maximum power, to fingers 12-n, respectively (step S3). As the number of user units shown in Fig. 4 is four, the path with the maximum power in the user unit (#1) is allocated to the finger 12-1, the path with the maximum power in the user unit (#2) is allocated to the finger 12-2, and so on until the path with the maximum power in the user unit (#4) is allocated to the finger 12-4. The path detecting units 11 a to 11 d and rake combining units 13a to 13d are also allocated in the same manner.

More specifically, the control unit 1 controls the change-over switches in such a way that the change-over switch 14c connects the finger 12-1 with the input of the user unit (#1), the change-over switch 15c connects the finger 12-1 with the path detecting unit 11a, and the change-over switch 16c connects the finger 12-1 with the rake combining unit 13a. In this manner, the finger 12-1 separately demodulates the path that has the maximum power as determined based on the path information obtained from the path detecting unit 11 a.

The remaining fingers to which the paths are not allocated in step S3 are allocated to the remaining paths. In Fig. 4, as the number of fingers is 32, the fingers that remain after the paths with the maximum powers are allocated to each user unit in step S3 is 28. The remaining paths of all the user units are sorted in descending order of the power (step S4) and are allocated to the fingers preferentially in descending order that is, from the finger 12-32 to 12-5 (step S5). In this way, at least one path is allocated to each user unit. The allocation of the path detecting units and the rake combining units etc. is also carried out by switching the change-over switches 14c, 15c, and 16c, as explained in step S3.

In the present embodiment, the allocation of the paths that remain after the path with the maximum power has been allocated is carried out in the descending order of their power and regardless of the user unit. However, the remaining paths can be allocated preferentially to the user unit that has the path with the least maximum power among the paths with the maximum power of all the user units.

Fourth Embodiment

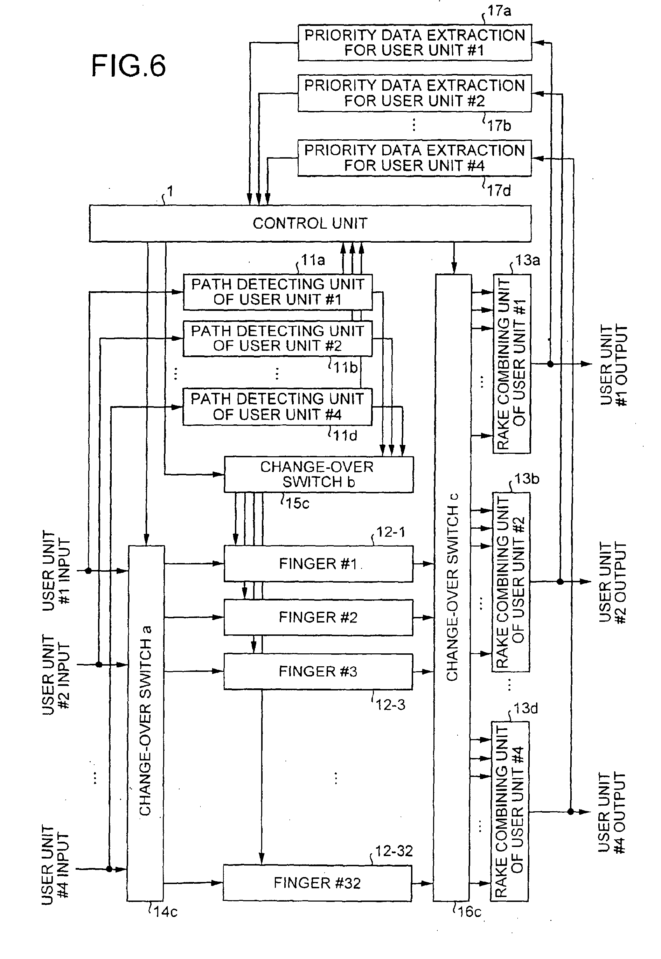

Fig. 6 is an example of a fourth embodiment of the present invention in which a flag that indicates a priority of communication is included in the transmitted data. The flag is detected at the time of demodulation and the number of fingers to be allocated is modified based on the priority of communication indicated by the flag. As shown in Fig. 6, the parts identical or equivalent to those shown in Fig. 3 are assigned the same reference numerals. The reference numerals 17a to 17d represent priority data extracting units that extract the flag, which indicates the priority included in the demodulating data.

Rake combining units 13a to 13d of user units (#1) to (#4) are connected to a control unit 1 via the priority data extracting units 17a to 17d. The control unit 1 compares the priority of communication in each user unit received from the priority data extracting units 17a to 17d. At the time of determining the number of fingers to be allocated based on the path information detected by path detecting units 11 a to 11d, the control unit 1 controls allocation of fingers in such a way that more fingers are allocated to the user units that carry out the communication of higher priority and controls the change-over switches 14c, 15c, and 16c for allocating the determined number of fingers to each user unit.

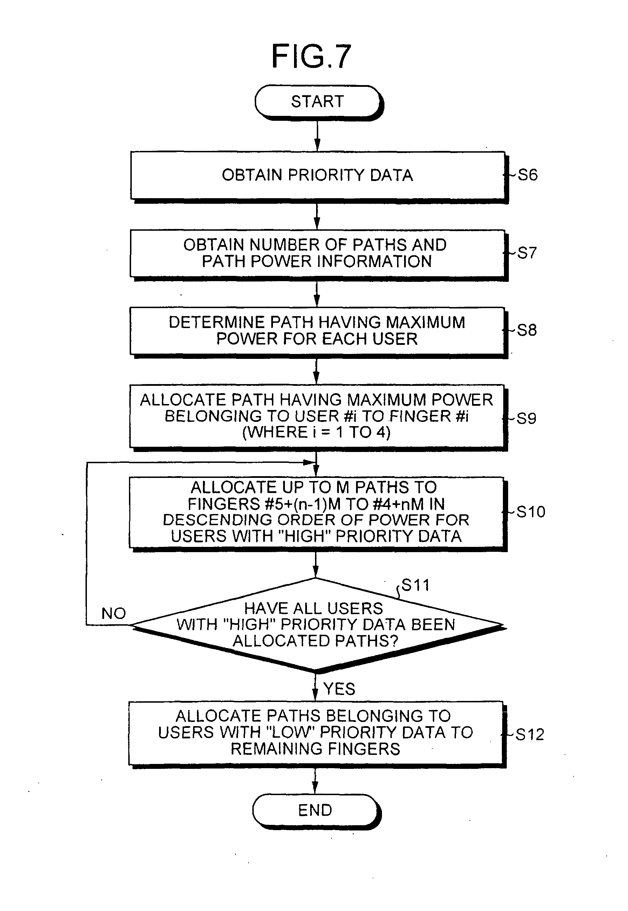

Fig. 7 is a flowchart that explains an example of allocating fingers controlled by the control unit 1 shown in Fig. 6.

The priority data extracting units 17a to 17d extract the priority data of each user unit from the output of the corresponding rake combining units 13a to 13d and the control unit 1 then obtains these priority data (step S6). We assume that the priority data has two types of priorities namely 'high' priority and 'low' priority. As shown in the flow chart in Fig. 7, the path detecting units 11a to 11d of the user units (#1) to (#4) detect number of paths as well as power of each path (step S7). According to this path information, the control unit 1 retrieves a path having the maximum power for each user unit (step S8) and then allocates these paths to corresponding fingers (one finger per each user unit) (step S9).

The remaining fingers are allocated to the rest of the paths of each user unit. The fingers are allocated first to the user units with a 'high' priority, so that the user units having 'high' priority are allocated more fingers. That means, in the user units having a 'high' priority data, the paths are allocated to the fingers in descending order of the power. The maximum number of fingers to be allocated to each user unit is limited to M, and once that number is reached, the remaining paths are not allocated (step S10, step S11). After the sequential allocation of the paths to the user units having a 'high' priority data is completed, the remaining paths are allocated to the fingers of the user units having a 'low' priority data (step S12). The allocation of each path to each finger in steps S9, S10, and S12 is controlled by switching the change-over switches 14c, 15c and 16c, in the same manner as the step S3 in Fig. 5.

In this manner; the control unit 1 allocates the fingers after taking the priority of the reception signal into consideration. Consequently, a communication quality that meets the requirement of the user unit can be achieved.

Fifth Embodiment

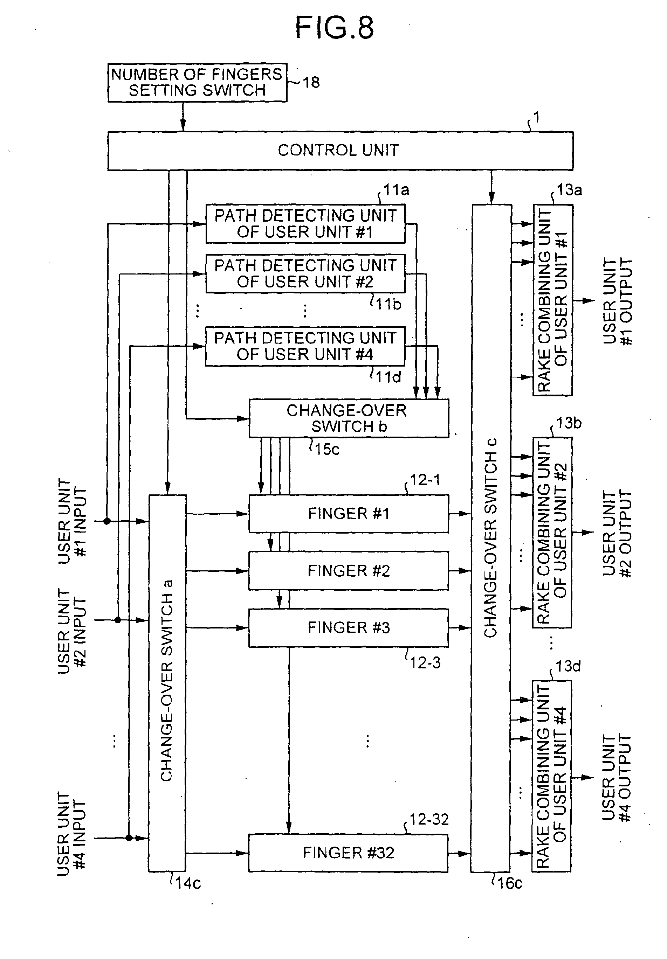

Fig. 8 is an example of an fifth embodiment of the present invention in which an operator determines the number of fingers to be allocated. As shown in Fig. 8, the parts identical or equivalent to those shown in Fig. 3 are assigned the same reference numerals. A number-of-fingers setting switch 18 is an example of a memory unit that stores the number of fingers as switching data and the user units use this number-of-fingers setting switch 18 to set the number of fingers to be allocated. The number-of-fingers setting switch 18 is connected to a control unit 1. The control unit 1 controls, based on the number of fingers set by the number-of-fingers setting switch 18, change-over switches 14c, 15c, and 16c and allocates fingers 12-1 to 12-32 to each user unit.

This kind of a structure with setting of the number-of-fingers setting switch 18 makes it possible to handle both the areas where more number of paths is required and the areas where less number of paths is required. In other words, when using this apparatus in an area where more number of paths is required, the number of fingers per user unit can be increased by reducing the number of user units. On the contrary, when using this apparatus in an area where less number of paths is required, the setting can be performed so that all the user units are used.

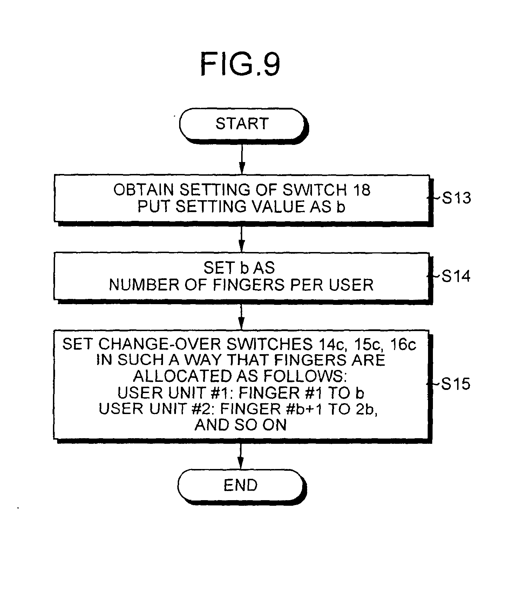

The operation of allocating fingers controlled by the control unit 1 of the above structure is explained next in detail with reference to the flow chart shown in Fig. 9.

The control unit 1 obtains information about number of fingers per user unit, which is set by the number-of-fingers setting switch 18 (step S13). Let us consider this value as b, which is internally set as the number of fingers (step S14). The change-over switches 14c, 15c, and 16c are set in such a way that a user unit (#1) uses the fingers 12-1 to 12-b, a user unit (#2) uses the fingers 12-b+1 to 12-2b, and so on (step S15). If the actual number of paths is less than the value b, some fingers are not used. If the value b is set too large, some fingers will not be utilized since it can not be possible to distribute the fingers to all the user units. However, on the contrary, by setting a high value for b, the number of fingers per user unit can be increased by reducing the number of user units.

Sixth Embodiment

A method of solving an overflow problem is explained below.

As shown in Fig. 3, the number of input signals of rake combining units 13a to 13d of each user unit varies according to the setting of a change-over switch 16c. When the present structure is implemented by assembling required hardwares, data are represented by bits of a fixed length. If the number of input signals varies, the optimum bit length after the combining process also varies accordingly. Consequently, according to the setting of the bit length, an overflow can occur after combining. A method of bit scaling is explained next as a countermeasure for the overflow of bit length.

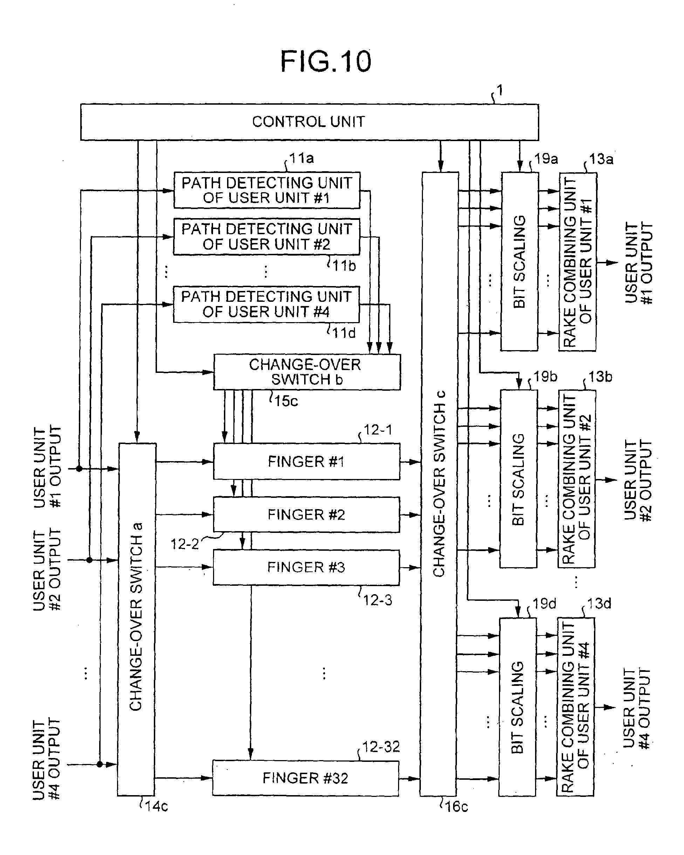

Fig. 10 is an example a sixth embodiment of the present invention, wherein the configuration is the receiving apparatus shown in Fig. 3 with a bit scaling. As shown in Fig. 10, the parts identical or equivalent to those shown in Fig. 3 are assigned the same reference numerals. The reference numerals 19a to 19d represent bit scaling units that trim, in accordance with the number of paths that are combined, the size of the demodulated signals carried by each finger. Although a unit performing a bit shifting is employed here as an implementation of the bit scaling unit, any overflow suppressing means can be used as long as it trims numerical values to prevent the overflow. For instance, means such as division by a certain number, an operation that extracts only some of the bits, subtraction, etc. can be employed.

Bit scaling in the user unit (#1) is explained below. When the number of inputs to the rake combining unit, that is the number of signals combined, is large, a bit scaling unit 19a that is placed between the change-over switch 16c and the rake combining unit 13a carries out the bit shift, based on the control of a control unit 1, to scale down each input level so as to avoid overflow after combining. That means, if we assume that the amount of the bit shift output from the control unit 1 is k, and the input of the bit scaling is x(i), then the output y(i) of a bit scaling unit 19-1, which becomes the input to the rake combining unit 13a, is expressed as:

$$y(i) = \lfloor\ x(i)/2^k \rfloor$$

$\lfloor\ z \rfloor$ is the largest integer not exceeding z, where, i = 1, 2, ..., N (where, N is the number of input signals received by the rake combining unit 13a).

The control unit 1 determines whether or not to carry out the bit scaling. For instance, when the number of demodulated signals to be combined exceeds the preset number, then bit scaling can be carried out in the corresponding bit scaling units 19a to 19d (however, if the number of demodulated signals to be combined does not exceed the preset number, bit scaling is not carried out). Alternatively, the value of the number of bits to be shifted k can be modified proportionate to the number of demodulated signals to be combined. Bit scaling can also be carried out when an occurrence of the overflow is detected.

In this way, by adjusting the size of the demodulated signals input from each finger, the combining process of the rake combining units 13a to 13d is properly carried out.

As shown in Fig. 10, although the bit scaling is added to the structure corresponding to Fig. 3, it can be applied to the structure of other embodiments as well.

Seventh Embodiment

Usually a control unit 1 sequentially and dynamically modifies allocation of fingers based on the communication status or the status of each user unit. However, a seventh embodiment of the present invention explains below a configuration in which an already allocated finger is re-allocated to another user unit under certain special conditions.

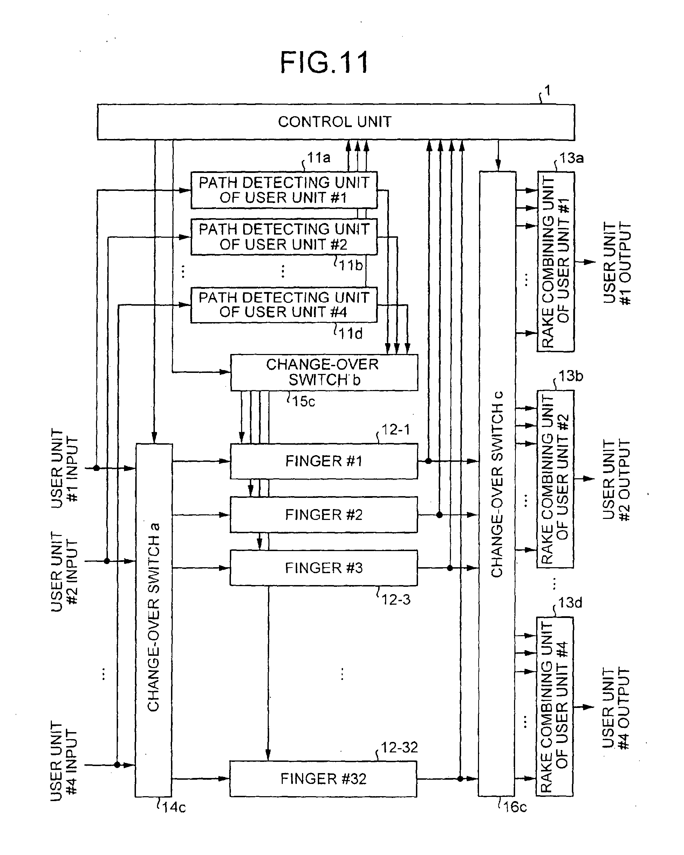

Fig. 11 is a block diagram of the demodulating apparatus according to the seventh embodiment of the present invention. As shown in Fig. 11, the parts identical or equivalent to those shown in Fig. 4 are assigned the same reference numerals. A control unit 1 in the present embodiment monitors signal levels of demodulated signals of fingers 12-1 to 12-32. When the communication condition changes to a certain condition, the control unit 1 executes re-allocation of the fingers.

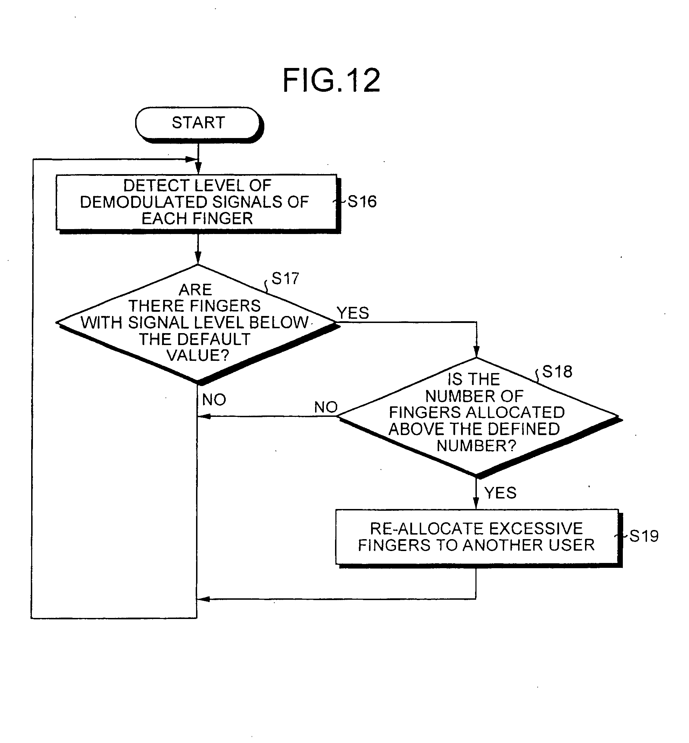

The re-allocation of the fingers controlled by the control unit 1 is explained below with reference to the flow chart shown in Fig. 12.

As explained in the first to sixth embodiments, when the fingers 12-1 to 12-32 are allocated to each user unit, the control unit1 starts monitoring the demodulated signals of the fingers 12-1 to 12-32. The control unit 1 detects the demodulated signals of the fingers 12-1 to 12-32 (step S16) and then decides whether the signal levels of the detected demodulated signals are less than a preset value (default value) (step S17). If the signal level is too low, it means a signal is ineffectual even if the signal is combined with the other signals in rake combining units 13a to 13d. Therefore, such a signal level is taken as the default value, and when a value of signal level is out of the default value, the finger is to be re-allocated.

If all the signal levels are higher than the default value, then the process returns to step S16, and starts over from detecting the demodulated signal levels after a certain time interval. If, on the other hand, the signal levels are lower than the default value, then it is determined whether the number of fingers allocated to the corresponding user unit is more than a predetermined number (defined number). If the number of fingers allocated is not more than the defined number, the process returns to step S16. On the other hand, if the number of fingers allocated is more than the defined number, those excessive fingers are re-allocated to other user units (step S19). The user units to which the fingers are to be re-allocated are determined based on the methods explained in the first to sixth embodiments or based on an eighth embodiment explained next.

Eighth Embodiment

An eighth embodiment of the present invention explains below a configuration in which the number of fingers allocated to each user unit is modified based on levels of output signals from rake combining units 13a to 13d.

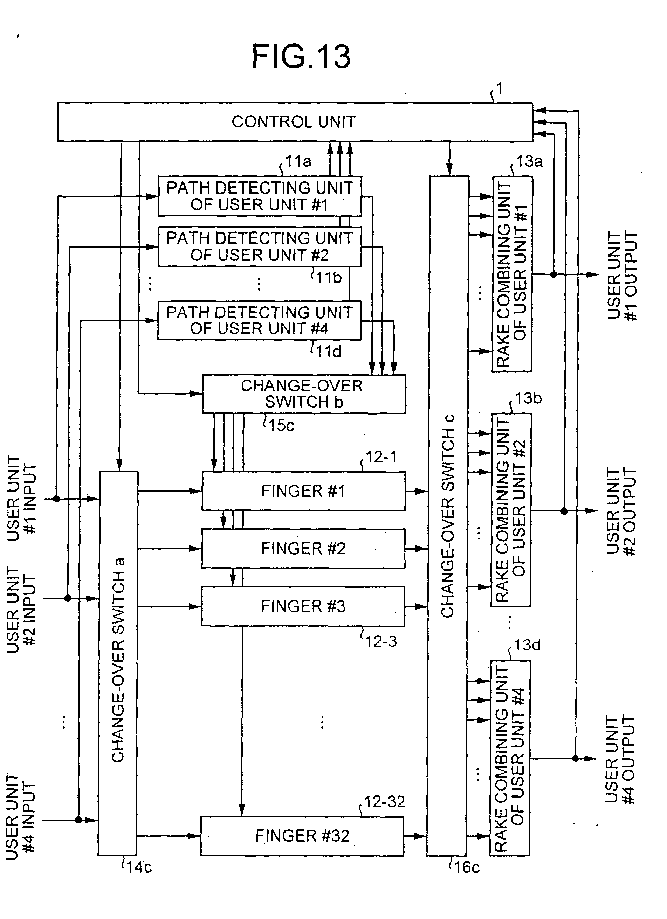

Fig. 13 is a block diagram that explains the demodulating apparatus according to the eighth embodiment of the present invention. As shown in Fig. 13, the parts identical or equivalent to those shown in Fig. 4 are assigned the same reference numerals. A control unit 1 is built in such a way that it detects output signals of each of the rake combining units 13a to 13d.

The basic operation is similar to that explained in the other embodiments. However, the standard based on which allocation of fingers is determined is different from that of the other embodiments. In other words, at the time of determining the allocation, the control unit 1 detects the output signals of each of the rake combining units 13a to 13d and then, based on signal levels of the output signals (i.e., signal intensities), determines number of fingers to be allocated to each user unit. For instance, for the rake combining units 13a to 13d having weak signal intensity, more number of fingers 12-1 to 12-32 is allocated. On the contrary, for the rake combining units 13a to 13d having strong signal intensity, less number of fingers 12-1 to 12-32 (less than the number of fingers allocated to the rake combining units 13a to 13d having weak signal intensity) is allocated. According to this structure, it is possible not only to properly demodulate the weaker signals, but also to achieve a demodulating apparatus that can perform even in more stringent communication environments.

At the time of starting communications, it is necessary to determine the allocation of fingers and demodulate signals using any of allocating methods in order to detect output signal levels. The allocation method of at this moment can be a conventional method where a fixed number of fingers is predetermined or any of the methods explained in the first to sixth embodiments.

The dynamic allocation of fingers to each user is explained in the first to eighth embodiments. These embodiments can be applied not only to the case that each user has only one channel, but also to the case that each user has signals of a plurality of channels. In this case, the user units that are allocated to each user can be allocated to each channel, and if the path detecting units 11 a to 11 d detect paths of corresponding channels, it is possible to dynamically allocate the fingers as explained above.

The receiving apparatus explained in the first to eighth embodiments can also be applied to a terminal apparatus. As long as the terminal apparatus performs communications using a plurality of base transceiver stations or a plurality of channels, the path detecting units 11a to 11d can detect corresponding paths for each channel, and it is possible to dynamically allocate fingers.

Moreover, the control unit 1 can dynamically modify the number of allocations in accordance with the changes in communication conditions even when the communication is in progress. This dynamic modification of finger allocation is carried out by the control unit 1 of the first to eighth embodiments by monitoring the change in the communication conditions and accordingly dynamically re-allocating a finger or fingers once allocated to one channel (or one user unit) to another channel. Consequently, communications of a better quality can be achieved owing to this finger allocation in response to the change in the communication conditions, such as communication environments etc.

INDUSTRIAL APPLICABILITY

The multi-user demodulating apparatus, the receiving apparatus, and the multi-channel demodulating method according to the present invention are suitable for a communication apparatus that uses a plurality of demodulating units such as fingers for a plurality of reception signals.

**Claims**

1. A multi-user demodulating apparatus, comprising:

   a plurality of demodulating units that separately demodulate reception signals of a plurality of paths transmitted from a plurality of transmission terminals, wherein the transmission terminals include a first transmission terminal and a second transmission terminal;
   a first combining unit that combines a plurality of demodulated signals corresponding to the first transmission terminal from among the signals demodulated by the demodulating units;
   a second combining unit that combines a plurality of demodulated signals corresponding to the second transmission terminal from among the signals demodulated by the demodulating units; and
   a switching unit that connects specific one of the demodulating units to either of the first combining unit and the second combining unit in a switchable manner.

2. The multi-user demodulating apparatus according to claim 1, further comprising:

   a path detecting unit that detects a number of paths corresponding to the second transmission terminal; and
   a control unit that controls the switching unit based on the number of paths detected by the path detecting unit in such a way that one of the demodulating units is connected to the second combining unit, wherein the paths are required for demodulating signals transmitted from the second transmission terminal.

3. The multi-user demodulating apparatus according to claim 1, further comprising a control unit that detects an intensity of the demodulated signal from the second combining unit and controls the switching unit based on the intensity, in such a way that one of the demodulating units is connected to the second combining unit.

4. The multi-user demodulating apparatus according to claim 1, further comprising a memory unit that stores switching data that are externally set, wherein the switching unit switches the connection statuses of the first combining unit and the second combining unit to the demodulating units based on the switching data.

5. The multi-user demodulating apparatus according to claim 1, further comprising a control unit that controls the switching unit, based on priority data of the second transmission terminal, in such a way that one of the demodulating units is connected to the second combining unit.

6. A receiving apparatus, comprising:

   a plurality of fingers that separately demodulate paths of one reception signal among a plurality of reception signals;
   a control unit that allocates the fingers by determining whether either of a group of the fingers and all the fingers demodulate paths of a first reception signal or paths of a second reception signal;

a first rake combining unit that rake-combines, based on the allocation of fingers by the control unit, the demodulated signals output from the fingers corresponding to the first reception signal; and

a second rake combining unit that rake-combines, based on the allocation of fingers by the control unit, the demodulated signals output from the fingers corresponding to the second reception signal.

7. The receiving apparatus according to claim 6, wherein the control unit allocates the fingers based on number of paths in either of the first reception signal and the second reception signal.

8. The receiving apparatus according to claim 6, wherein the control unit allocates the fingers based on an intensity of output signals from either of the first rake combining unit and the second rake combining unit.

9. The receiving apparatus according to claim 6, wherein the control unit re-allocates a part of the fingers allocated to the first reception signal to the second reception signal if the preset priority of the second reception signal is higher than the preset priority of the first reception signal.

10. The receiving apparatus according to any one of claims 6 to 9, wherein the control unit re-allocates fingers with a low reception level among the fingers allocated to the first reception signal to the second reception signal.

11. The receiving apparatus according to any one of claims 6 to 9, wherein the first rake combining unit includes an overflow suppressing unit that suppresses an addition overflow when combining the demodulated signals from the fingers.

12. The receiving apparatus according to claim 11, wherein the overflow suppressing unit functions corresponding to the number of fingers allocated by the control unit.

13. A multi-channel demodulating method, comprising:

a detecting step of detecting communication conditions of a plurality of communication channels;

an allocation changing step of dynamically changing, based on the detection result, allocation of a plurality of demodulating units for each communication channel across the communication channels; and

a combining step, wherein each of a plurality of combining units provided corresponding to the communication channels combines, based on the allocation result in the allocation changing step, demodulated signals from the demodulating units allocated to the corresponding communication channels, wherein

the demodulating method is for a demodulating apparatus that has a plurality of demodulating units, separately demodulates signals of a plurality of paths in one communication channel using the demodulating units, combines demodulated signals using a plurality of combining units, and obtains a plurality of combined signals of the paths.

# FIG.1

**110 USER UNIT #1**

PATH DETECTING UNIT — 111

FINGER #1 — 112-1

FINGER #2 — 112-2

FINGER #7

FINGER #8 — 112-8

RAKE COMBINING UNIT — 113

USER UNIT #1 INPUT

USER UNIT #1 OUTPUT

**120 USER UNIT #2**

PATH DETECTING UNIT OF USER UNIT #1 — 121

FINGER #1 — 122-1

FINGER #2 — 122-2

FINGER #7

FINGER #8 — 122-8

RAKE COMBINING UNIT — 123

USER UNIT #2 INPUT

USER UNIT #2 OUTPUT

11

# FIG.2

# FIG.3

EP 1 376 887 A1

# FIG.4

CONTROL UNIT — 1

PATH DETECTING UNIT OF USER UNIT #1 — 11a

PATH DETECTING UNIT OF USER UNIT #2 — 11b

PATH DETECTING UNIT OF USER UNIT #4 — 11d

CHANGE-OVER SWITCH b — 15c

CHANGE-OVER SWITCH a — 14c

CHANGE-OVER SWITCH c — 16c

FINGER #1 — 12-1

FINGER #2

FINGER #3 — 12-3

FINGER #32 — 12-32

RAKE COMBINING UNIT OF USER UNIT #1 — 13a

RAKE COMBINING UNIT OF USER UNIT #2 — 13b

RAKE COMBINING UNIT OF USER UNIT #4 — 13d

USER UNIT #1 INPUT

USER UNIT #2 INPUT

USER UNIT #4 INPUT

USER UNIT #1 OUTPUT

USER UNIT #2 OUTPUT

USER UNIT #4 OUTPUT

# FIG.5

START

OBTAIN NUMBER OF PATHS AND
PATH POWER INFORMATION — S1

DETERMINE PATH HAVING MAXIMUM
POWER FOR EACH USER — S2

ALLOCATE PATH HAVING MAXIMUM POWER
BELONGING TO USER #i TO FINGER #i
(WHERE i = 1 TO 4) — S3

SORT ALL REMAINING PATHS FOR EVERY
USER IN DESCENDING ORDER OF POWER — S4

ALLOCATE PATHS 1 TO 28 TO
FINGERS #5 TO #32 — S5

END

FIG.6

PRIORITY DATA EXTRACTION
FOR USER UNIT #1                    17a

PRIORITY DATA EXTRACTION
FOR USER UNIT #2                    17b

PRIORITY DATA EXTRACTION
FOR USER UNIT #4                    17d

CONTROL UNIT                    1

PATH DETECTING UNIT
OF USER UNIT #1                 11a

PATH DETECTING UNIT
OF USER UNIT #2                 11b

PATH DETECTING UNIT
OF USER UNIT #4                 11d

CHANGE-OVER
SWITCH b                        15c

FINGER #1                       12-1

FINGER #2

FINGER #3                       12-3

FINGER #32                      12-32

CHANGE-OVER SWITCH a            14c

CHANGE-OVER SWITCH c            16c

RAKE COMBINING UNIT OF USER UNIT #1    13a

RAKE COMBINING UNIT OF USER UNIT #2    13b

RAKE COMBINING UNIT OF USER UNIT #4    13d

USER UNIT #1 INPUT

USER UNIT #2 INPUT

USER UNIT #4 INPUT

USER UNIT #1 OUTPUT

USER UNIT #2 OUTPUT

USER UNIT #4 OUTPUT

# FIG.7

START

OBTAIN PRIORITY DATA — S6

OBTAIN NUMBER OF PATHS AND
PATH POWER INFORMATION — S7

DETERMINE PATH HAVING MAXIMUM
POWER FOR EACH USER — S8

ALLOCATE PATH HAVING MAXIMUM POWER
BELONGING TO USER #i TO FINGER #i
(WHERE i = 1 TO 4) — S9

ALLOCATE UP TO M PATHS TO
FINGERS #5+(n-1)M TO #4+nM IN
DESCENDING ORDER OF POWER FOR
USERS WITH "HIGH" PRIORITY DATA — S10

S11
HAVE ALL USERS
WITH "HIGH" PRIORITY DATA BEEN
ALLOCATED PATHS?

NO

YES

ALLOCATE PATHS BELONGING TO
USERS WITH "LOW" PRIORITY DATA TO
REMAINING FINGERS — S12

END

# FIG.8

NUMBER OF FINGERS SETTING SWITCH ~18

CONTROL UNIT — 1

PATH DETECTING UNIT OF USER UNIT #1 — 11a

PATH DETECTING UNIT OF USER UNIT #2 — 11b

PATH DETECTING UNIT OF USER UNIT #4 — 11d

CHANGE-OVER SWITCH b — 15c

RAKE COMBINING UNIT OF USER UNIT #1 — 13a — USER UNIT #1 OUTPUT

RAKE COMBINING UNIT OF USER UNIT #2 — 13b — USER UNIT #2 OUTPUT

RAKE COMBINING UNIT OF USER UNIT #4 — 13d — USER UNIT #4 OUTPUT

CHANGE-OVER SWITCH c — 16c

CHANGE-OVER SWITCH a — 14c

FINGER #1 — 12-1

FINGER #2

FINGER #3 — 12-3

FINGER #32 — 12-32

USER UNIT #1 INPUT

USER UNIT #2 INPUT

USER UNIT #4 INPUT

# FIG.9

START

OBTAIN SETTING OF SWITCH 18
PUT SETTING VALUE AS b — S13

SET b AS
NUMBER OF FINGERS PER USER — S14

SET CHANGE-OVER SWITCHES 14c, 15c, 16c
IN SUCH A WAY THAT FINGERS ARE
ALLOCATED AS FOLLOWS:
USER UNIT #1: FINGER #1 TO b
USER UNIT #2: FINGER #b+1 TO 2b,
AND SO ON — S15

END

# FIG.10

CONTROL UNIT — 1

PATH DETECTING UNIT OF USER UNIT #1 — 11a

PATH DETECTING UNIT OF USER UNIT #2 — 11b

PATH DETECTING UNIT OF USER UNIT #4 — 11d

CHANGE-OVER SWITCH b — 15c

FINGER #1 — 12-1

FINGER #2 — 12-2

FINGER #3 — 12-3

FINGER #32 — 12-32

CHANGE-OVER SWITCH a — 14c

CHANGE-OVER SWITCH c — 16c

USER UNIT #1 OUTPUT

USER UNIT #2 OUTPUT

USER UNIT #4 OUTPUT

BIT SCALING — 19a

RAKE COMBINING UNIT OF USER UNIT #1 — 13a

USER UNIT #1 OUTPUT

BIT SCALING — 19b

RAKE COMBINING UNIT OF USER UNIT #2 — 13b

USER UNIT #2 OUTPUT

BIT SCALING — 19d

RAKE COMBINING UNIT OF USER UNIT #4 — 13d

USER UNIT #4 OUTPUT

20

# FIG.11

# FIG.12

START

DETECT LEVEL OF
DEMODULATED SIGNALS OF
EACH FINGER — S16

ARE
THERE FINGERS
WITH SIGNAL LEVEL BELOW
THE DEFAULT
VALUE? — S17

YES

NO

IS THE
NUMBER OF
FINGERS ALLOCATED
ABOVE THE DEFINED
NUMBER? — S18

NO

YES

RE-ALLOCATE EXCESSIVE
FINGERS TO ANOTHER USER — S19

# FIG.13

CONTROL UNIT — 1

PATH DETECTING UNIT OF USER UNIT #1 — 11a

PATH DETECTING UNIT OF USER UNIT #2 — 11b

PATH DETECTING UNIT OF USER UNIT #4 — 11d

CHANGE-OVER SWITCH b — 15c

RAKE COMBINING UNIT OF USER UNIT #1 — 13a

RAKE COMBINING UNIT OF USER UNIT #2 — 13b

RAKE COMBINING UNIT OF USER UNIT #4 — 13d

CHANGE-OVER SWITCH c — 16c

CHANGE-OVER SWITCH a — 14c

FINGER #1 — 12-1

FINGER #2

FINGER #3 — 12-3

FINGER #32 — 12-32

USER UNIT #1 INPUT

USER UNIT #2 INPUT

USER UNIT #4 INPUT

USER UNIT #1 OUTPUT

USER UNIT #2 OUTPUT

USER UNIT #4 OUTPUT

23

## INTERNATIONAL SEARCH REPORT

| International application No. |
| --- |
| PCT/JP02/03265 |

**A. CLASSIFICATION OF SUBJECT MATTER**
Int.Cl⁷ H04B1/707

According to International Patent Classification (IPC) or to both national classification and IPC

**B. FIELDS SEARCHED**

Minimum documentation searched (classification system followed by classification symbols)
Int.Cl⁷ H04J13/00-13/06, H04B1/69-1/713

Documentation searched other than minimum documentation to the extent that such documents are included in the fields searched

| | | | |
| --- | --- | --- | --- |
| Jitsuyo Shinan Koho | 1926-1996 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>A | JP 9-501547 A (Nokia Telecommunications Oy),<br>10 February, 1997 (10.02.97),<br>Full text<br>& WO 94/30025 A1       & FI 9302605 A<br>& NO 9504958 A        & EP 739575 A1<br>& AU 680912 B         & CN 1125032 A<br>& US 5684793 A        & EP 739575 B1<br>& DE 69420150 E       & JP 3162400 B2 | 6,8,10,13<br>1-5,7,9,<br>11,12 |
| X<br>A | JP 2000-232430 A (NEC Corp.),<br>22 August, 2000 (22.08.00),<br>Full text<br>& EP 1028540 A2        & BR 200000493 A<br>& CN 1263390 A         & KR 2000071333 A | 6,7,10,13<br>1-5,8,9,<br>11,12 |

| ☒ Further documents are listed in the continuation of Box C. | ☐ See patent family annex. |
| --- | --- |

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>25 June, 2002 (25.06.02) | Date of mailing of the international search report<br>02 July, 2002 (02.07.02) |
| --- | --- |
| Name and mailing address of the ISA/<br>Japanese Patent Office | Authorized officer |
| Facsimile No. | Telephone No. |

Form PCT/ISA/210 (second sheet) (July 1998)

**INTERNATIONAL SEARCH REPORT**

| International application No. |
|---|
| PCT/JP02/03265 |

C (Continuation).   DOCUMENTS CONSIDERED TO BE RELEVANT

| Category* | Citation of document, with indication, where appropriate, of the relevant passages | Relevant to claim No. |
|---|---|---|
| E,X | JP 2001-189680 A  (Hitachi Kokusai Electric Inc.), 10 July, 2001 (10.07.01), Full text (Family: none) | 6,7,13 |
| E,X | JP 2002-9663 A  (NEC Corp.), 11 January, 2002 (11.01.02), Full text (Family: none) | 1,2,6,7,13 |

Form PCT/ISA/210 (continuation of second sheet) (July 1998)